# EUROPEAN PATENT SPECIFICATION

(11) **EP 0 326 414 B1**
(45) Date of publication and mention of the grant of the patent: **13.08.1997**
(21) Application number: 89300820.1
(22) Date of filing: 27.01.1989
(51) Int. Cl.: G06F 7/52

(54) **High speed multiplier**
Hochgeschwindigkeits-Multiplizierer
Multiplieur à grande vitesse

(30) Priority: 29.01.1988 US 149779
(43) Date of publication of application: 02.08.1989
(73) Proprietor: TEXAS INSTRUMENTS INCORPORATED, Dallas Texas 75265 (US)
(72) Inventor: Darley, Henry M., Plano Texas 75074 (US); Ovens, Kevin M., Garland Texas 75043 (US); Niehaus, Jeffrey A., Dallas Texas 75252 (US)
(74) Representative: Abbott, David John

(56) References cited:
- IEEE INTERNATIONAL CONFERENCE ON COMPUTER DESIGN VLSI IN COMPUTERS AND PROCESSORS, Rye Brook, New York, 5th - 8th October 1987, pages 414-417; O. KAL et al.: "High speed multiplier design using redundant signed digit numbers"
- IBM TECHNICAL DISCLOSURE BULLETIN, vol. 27, no. 11, April 1985, pages 6624- 6632, New York, US; "Improved approach to the use of booth's multiplication algorithm"
- IEEE TRANSACTIONS ON COMPUTERS, vol. C-34, no. 9, September 1985, pages 789- 796, IEEE, New York, US; N. TAKAGI et al.: "High-speed VLSI multiplication algorithm with a redundant binary addition tree"
- PROCEEDINGS OF THE FALL JOINT COMPUTER CONFERENCE, AFIPS CONFERENCE PROCEEDINGS, San Francisco, October 1964, vol. 26, part 1, pages 663-672, Spartan Books, Baltimore, US; A. AVIZIENIS et al.: "Binary-compatible signed- digit arithmetic"

## Description

### TECHNICAL FIELD OF THE INVENTION

This invention pertains in general to integrated circuits, and more particularly to a high speed multiplier circuit having a small layout area.

### BACKGROUND OF THE INVENTION

High speed computation is a critical design factor in many systems, such as computers, signal processors, and process controllers. These systems increasingly rely on LSI integrated circuits to perform the multiplication functions. The most critical design parameter for the multiplication circuits is the speed at which the multiplication is performed; but also of great importance is the silicon area required for the circuit implementation and the ease of the layout of the circuit design.

Previously developed high speed multipliers employ a Booth-Wallace tree parallel array approach. The Booth technique recodes one operand as a signed digit radix four number. In the radix two representation, each digit is represented by two bits. The partial products of the multiplication are formed by multiplying the radix four digit times the second operand. The resultant partial products from the multiplication are reduced approximately in half from a binary parallel array, because the radix four representation contains half as many digits as the binary representation.

The partial products can be further reduced by Octal recoding, wherein a signed digit radix eight number (each digit comprises three bits) is used. The Octal recoding reduces the number of partial products by two-thirds; however, the technique is heretofore not practical because it requires partial products that are multiples of three. Since multiples of three cannot be generated simply by a shift, but require a shift and an add operation, the advantage of the reduced partial products is negated by the additional time for the add operation.

A multiplier using octal recoding is disclosed in IBM Technical Disclosure Bulletin, Volume 27, Number 11, April 1985, pages 6624-6632.

A Wallace tree approach is used in high speed multipliers because it permits adding partial products in parallel rather than as a linear sequence in the pure parallel array approach. The major disadvantage of the Wallace tree is the complex routing which is required to calculate separate sum and carry streams. The design and layout of the Wallace tree circuit is even more complex due to the fact that the number of digits in each column of the partial product array changes with the place value of the digit. Thus, Wallace tree approaches tend to be routing intensive and have little iterative structure.

Recently, a binary tree approach has been developed wherein a signed digit redundant logic representation of numbers is employed along with a radix two operand. This approach is described in N. Takagi, H. Yasuura, and S. Yajima, High-Speed VLSI Multiplication Algorithm with a Redundant Binary Addition tree, IEEE Transactions On Computers, Vol. C-34, No. 9, September, 1985, pp. 789-795. The proposed multiplier described in the article uses a signed digit representation in which each digit may be a "0", "1", or "-1". The signed digit representation allows parallel addition of two N-digit numbers performed in a constant time independent of the number of digits in the number without carry propagation. Because the signed digit representation uses two bits for each digit, the addition is more complex, therefore slower. However, the layout of the circuit is simpler than the Wallace tree layout, and the slowness in speed is somewhat offset by the avoidance of the carry chain.

Thus, a need has arisen in the industry for a high speed multiplier having a less complex layout to reduce chip area size, while not sacrificing the speed of the multiplication.

According to the present invention there is provided a circuit for multiplying a multiplicand by a multiplier, comprising:
input means for receiving the multiplicand;
tripling circuitry for generating an intermediate product equal to three times the multiplicand;
recoding circuitry to recode the multiplier in groups of three bits into an octal representation according to the following table:

| Bᵢ₊₂ | Bᵢ₊₁ | Bᵢ | Bᵢ₋₁ | Rₖ |
|---|---|---|---|---|
| 0 | 0 | 0 | 0 | 0 |
| 0 | 0 | 0 | 1 | 1 |
| 0 | 0 | 1 | 0 | 1 |
| 0 | 0 | 1 | 1 | 2 |
| 0 | 1 | 0 | 0 | 2 |
| 0 | 1 | 0 | 1 | 3 |
| 0 | 1 | 1 | 0 | 3 |
| 0 | 1 | 1 | 1 | 4 |
| 1 | 0 | 0 | 0 | -4 |
| 1 | 0 | 0 | 1 | -3 |
| 1 | 0 | 1 | 0 | -3 |
| 1 | 0 | 1 | 1 | -2 |
| 1 | 1 | 0 | 0 | -2 |
| 1 | 1 | 0 | 1 | -1 |
| 1 | 1 | 1 | 0 | -1 |
| 1 | 1 | 1 | 1 | 0 |

where Bᵢ, Bᵢ₊₁ and Bᵢ₊₂ are the three adjacent bits of the multiplier and Rₖ is the recoded digit output;
a plurality of partial product generators each responsive to a digit output of the recoding circuitry to generate a partial product equal to the recoded digit of the multiplier times the multiplicand, each partial product generator having a multiplexer responsive to Rₖ equal to 3 or -3 to select either the multiplicand or three times the multiplicand, shifting means connected to the output of the multiplexer and responsive to Rₖ equal to 2, -2, 4 or -4 and inverting means responsive to the sign of Rₖ selectively to invert the sign bit of the the output of the multiplexer and shifting means by which the appropriate sign bits are inverted; and
Signed digit adding circuitry to sum the partial products.

In an important aspect of the present invention addition is performed using signed digit addition, wherein each digit is represented by a one, zero or minus one. The signed digit addition provides the technical advantage of a similar layout for the adding section, requiring less chip area than other adding circuits.

### BRIEF DESCRIPTION OF THE DRAWINGS

For a more complete understanding of the present invention and the advantages thereof, reference is now made to the following description now taken in conjunction with the accompanying drawings in which:
FIGURE 1 is a functional block diagram of the multiplier of the present invention;
FIGURE 2 is a chart illustrating the formation of signed digit numbers;
FIGURE 3 is an example of addition using signed digit numbers; and
FIGURE 4 is a functional block diagram of the partial product generators of FIGURE 1.

### DETAILED DESCRIPTION OF THE INVENTION

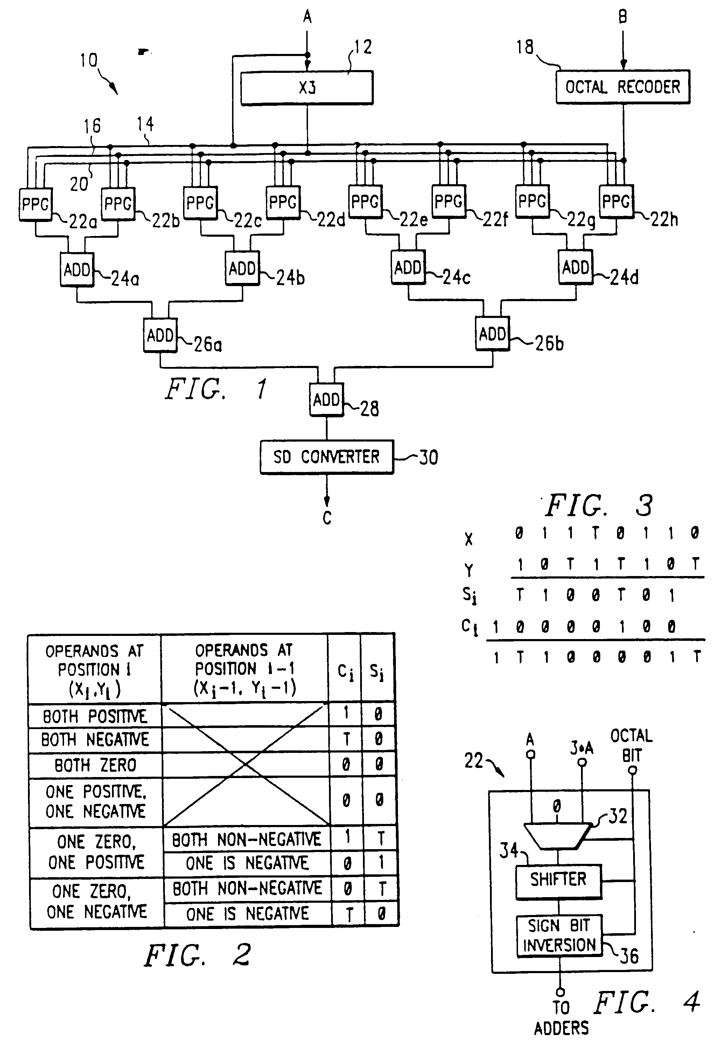

The preferred embodiment of the present invention is best understood by referring to FIGUREs 1-4 of the drawings, like numerals being used for like and corresponding parts of the various drawings.

FIGURE 1 illustrates a functional block diagram of the multiplier 10 of the present invention. The multiplicand A is connected to the input of a tripling generator 12, which produces an output equal to the multiplicand A times three, and to a first bus 14. The output of the tripling generator 12 is connected to a second bus 16. The second operand, the multiplier B, is connected to an Octal recoder 18, the output of which is connected to a third bus 20. The first, second and third buses are each connected to respective inputs to a plurality of partial product generators 22a-h. The number of partial product generators 22 will be determined by the bit length of the operands A and B; in this case, an operand bit length of 24 is assumed, requiring eight partial product generators.

Pairs of the partial product generators 22 are connected to first level adders 24a-d. Partial product generators 22a-b are connected to first level adder 24a, partial product generators 22c-d are connected to adder 24b, partial product generators 22e-f are connected to first level adder 24c and partial product generators 22g-h are connected to first level adder 24d. The outputs of the first level adders are paired and connected to second level adders 26a-b: the outputs of first level adders 24a-b are connected to second level adder 26a and the outputs of first level adders 24c-d are connected to second level adder 26b. The outputs of the second level adders 26a-b are connected to the third level adder 28, the output of which is connected to a signed digit converter 30 which may be used to convert the signed digit output of the adder 28 into a binary or two's complement result, if desired.

The multiplicand A should be in signed digit form or conventional binary magnitude representation. This allows for hardware savings in the design of the tripling generator 12. In a signed digit number, each digit is represented by a "1", "0", or "-1". Typically, this is implemented using two bits for each digit, a first bit indicating the magnitude of the digit, i.e., zero or one, and the second bit indicating the sign of the digit, i.e., plus or minus, if the digit has a magnitude of one.

The signed digit representation provides for redundant expressions for a given number. For example, the number three may be represented by the expressions 0011, 010T, 01T1, 1T0T or 1TT1, where T represents -1. The redundancy of the signed digit number system allows two numbers to be added in parallel without a rippled carry.

It should be noted that all binary numbers are also signed digit representations since they may be regarded as having positive sign bits. Therefore, binary numbers need not be converted to a signed digit representation prior to addition.

The use of signed digit representation simplifies the layout of the addition circuitry providing the technical advantage of a smaller chip area required therefor.

The second operand, the multiplier B, is input to the Octal recoder 18 which recodes the operand into a recoded multiplier B' in which groups of three bits are recoded into single digits having a value in the set [4, 3, 2, 1, 0, -1, -2, -3, -4]. A twenty-four binary number can be transformed into an octally recoded number representation having eight digits, each digit having an integer value between four and minus four.

The recording can be accomplished as described in connection with TABLE I below. Bᵢ are the individual bits of the binary number being recoded, where "i" ranges between zero and N. The recoded number Rₖ can be determined using TABLE I for i=0, 3, 6, 9,... and k=i/3. For example, B=101101001 would correspond to R₂=-2, R₁=-3 and R₀=1. The table assumes the number is 3N-bits long and is a 2's complement number (i.e. a leading "one" bit indicates a negative number).

**TABLE I**

| Recoding Binary to Octal | | | | |
|---|---|---|---|---|
| Bᵢ₊₂ | Bᵢ₊₁ | Bᵢ | Bᵢ₋₁ | Rₖ |
| 0 | 0 | 0 | 0 | 0 |
| 0 | 0 | 0 | 1 | 1 |
| 0 | 0 | 1 | 0 | 1 |
| 0 | 0 | 1 | 1 | 2 |
| 0 | 1 | 0 | 0 | 2 |
| 0 | 1 | 0 | 1 | 3 |
| 0 | 1 | 1 | 0 | 3 |
| 0 | 1 | 1 | 1 | 4 |
| 1 | 0 | 0 | 0 | -4 |
| 1 | 0 | 0 | 1 | -3 |
| 1 | 0 | 1 | 0 | -3 |
| 1 | 0 | 1 | 1 | -2 |
| 1 | 1 | 0 | 0 | -2 |
| 1 | 1 | 0 | 1 | -1 |
| 1 | 1 | 1 | 0 | -1 |
| 1 | 1 | 1 | 1 | 0 |

The output of the Octal recoder 18 may comprise six lines for each digit, five of the lines indicating the magnitude of the digit, and the sixth line indicating the sign of the digit.

Each digit of the recoded multiplier B' multiplies the multiplicand A to produce a respective partial product. In the illustrated embodiment, the eight digits of B' would each produce a partial product. Multiplication by four or two may be accomplished by shifting the multiplicand A to the left by two or one places, respectively. Multiplication by minus four or minus two may be accomplished by shifting the multiplicand A to the left by two or one places, and inverting the sign bits corresponding to the nonzero magnitude bits. Multiplication by one is accomplished by passing the multiplicand unshifted. Multiplication by zero results in a product of zero.

Multiplication by three requires both a shift and an add. In the multiplier 10, multiplication by three is provided by the tripling generator 12 which provides an output of A∗3, which is available for use in computing any of the partial products. Multiplication by minus three is accomplished by inverting the sign bits of the number output from the tripling generator 12.

Each digit of B' output by the Octal recoder 18 is connected to a respective partial product generator 22a-h. Each of the partial product generators 22a-h is essentially a multiplexer having shifting and inverting capabilities. If the digit from the Octal recoder 18 present on the portion of the third bus 20 connected to a particular partial product generator 22a-h is a 4, 2, -2, or -4, the multiplicand A present on the first bus 14 is shifted appropriately, and the appropriate sign bits are inverted if the multiplier digit is negative. If the multiplier digit is a one or a minus one, the partial product generator 22a-h outputs a value equal to the multiplicand on the first bus 14, inverting the sign bits as appropriate. If the multiplier digit is a zero, the partial product generator 22a-h outputs a zero. If the multiplier digit is a three or a minus three, the partial product generator 22a-h outputs the value on the second bus 16, inverting the appropriate sign bits if the multiplier digit is a minus three.

The first, second and third level adders 24a-d, 26a-b, and 28, are signed digit adders, capable of performing parallel addition without carry propagation. Signed digit addition is described in detail in an N. Takagi, H. Yasuura, and S. Yajima, High-Speed VLSI Multiplication Algorithm with a Redundant Binary Addition Tree, IEEE Transactions On Computers, Vol. C-34, No. 9, September, 1985, pp. 789-795, which is incorporated by reference herein.

FIGURE 2 illustrates a table describing conversion of the operands into an intermediate sum and an intermediate carry. After conversion, the intermediate sum and intermediate carry are added without generating a carry. As an example, "X" is chosen as 011T0110 and "Y" is chosen as 10T1T10T. From FIGURE 2, the intermediate sum can be determined as T100T01T, and the carry sum can be determined as 1000100 from FIGURE 2. The carry sum is left shifted one place and added to the intermediate sum, rendering the sum of 1T100001T. The calculation is set forth in FIGURE 3.

FIGURE 4 illustrates a functional block diagram of the partial product generators 22a-h. Each partial product generator inputs the multiplier A, the product A∗3, and a respective octal digit of the multiplicand B. An internal multiplexer 32 selects between A, A∗3, or zero depending upon the magnitude of the digit of B connected to the partial product generator 22. If the digit of B has a magnitude of two or four, the multiplexer selects the multiplicand A and the shifter 34 shifts the bits by one or two places. If the digit of B has a magnitude of one, zero, or three, then the appropriate input is passed through without shifting. If the digit of B is negative, the sign bits corresponding to bits having a magnitude of one are inverted by the sign bit inversion circuitry 36.

The outputs from the partial product generators 22a-h are connected to their respective first level adders 24a-d, such that the appropriate shifting is provided to account for the significance between the partial products. Similarly, the outputs of the first level adders 24a-d are connected to the respective second level adders 26a-b such that the proper shifting is provided. Likewise, the second level adders 26a-b are connected to the third level adder 28 to provide the proper shifting.

By combining the Octal recoding with the signed digit addition, the layout of the cell is simplified without a reduction in speed caused by the separate magnitude and sign bits. Therefore, the present invention provides the technical advantage of a multiplier circuit having a small layout area without reduced speed.

## Claims

1. A circuit for multiplying a multiplicand by a multiplier, comprising:
input means for receiving the multiplicand (A);
tripling circuitry (12) for generating an intermediate product equal to three times the multiplicand;
recoding circuitry (18) to recode the multiplier (B) in groups of three bits into an octal representation according to the following table:
| Bᵢ₊₂ | Bᵢ₊₁ | Bᵢ | Bᵢ₋₁ | Rₖ |
|---|---|---|---|---|
| 0 | 0 | 0 | 0 | 0 |
| 0 | 0 | 0 | 1 | 1 |
| 0 | 0 | 1 | 0 | 1 |
| 0 | 0 | 1 | 1 | 2 |
| 0 | 1 | 0 | 0 | 2 |
| 0 | 1 | 0 | 1 | 3 |
| 0 | 1 | 1 | 0 | 3 |
| 0 | 1 | 1 | 1 | 4 |
| 1 | 0 | 0 | 0 | -4 |
| 1 | 0 | 0 | 1 | -3 |
| 1 | 0 | 1 | 0 | -3 |
| 1 | 0 | 1 | 1 | -2 |
| 1 | 1 | 0 | 0 | -2 |
| 1 | 1 | 0 | 1 | -1 |
| 1 | 1 | 1 | 0 | -1 |
| 1 | 1 | 1 | 1 | 0 |
where Bᵢ₋₁, Bᵢ, Bᵢ₊₁ and Bᵢ₊₂ are the four adjacent bits of the multiplier and Rₖ is the recoded digit output;
a plurality of partial product generators (22a-h) each responsive to a digit output of the recoding circuitry (18) to generate a partial product equal to the recoded digit of the multiplier times the multiplicand, each partial product generator having a multiplexer (32) responsive to Rₖ equal to 3 or -3 to select either the multiplicand (A) or three times the multiplicand (3A) shifting means (34) connected to the output of the multiplexer (32) and responsive to Rₖ equal to 2, -2, 4 or -4 and inverting means (36) responsive to the sign of Rₖ selectively to invert the sign bit of the output of the multiplexer and shifting means by which the appropriate sign bits are inverted; and
Signed Digit adding circuitry (24,26,28) to sum the partial products.

2. The circuit of claim 1 wherein said signed digit adding circuitry (24,26,28) comprises a plurality of signed digit adders.

3. The circuit of claim 2 and further comprising output conversion circuitry (30) for translating a signed digit number into a binary number.

4. The circuit of claim 2 and further comprising output conversion circuitry (30) for translating a signed digit number into a two's complement number.

5. The circuit of claim 1 and further comprising output conversion circuitry for translating the multiplicand into a signed digit number.

6. The circuit of any preceding claim wherein said partial product generators (22a-h) include zeroing means for outputting a zero in response to multiplier digits having a value of zero.

## Patentansprüche

1. Schaltung zum Multiplizieren eines Multiplikanten mit einem Multiplikator, mit:
einer Eingabeeinrichtung für den Empfang des Multiplikanten (A);
einer Verdreifachungsschaltungsanordnung (12) für die Erzeugung eines Zwischenprodukts, das gleich dem dreifachen Multiplikanten ist;
einer Umcodierungsschaltungsanordnung (18), um den Multiplikator (B) in Gruppen von 3 Bits gemäß der folgenden Tabelle in eine Oktaldarstellung umzucodieren:
| Bᵢ₊₂ | Bᵢ₊₁ | Bᵢ | Bᵢ₋₁ | Rₖ |
|---|---|---|---|---|
| 0 | 0 | 0 | 0 | 0 |
| 0 | 0 | 0 | 1 | 1 |
| 0 | 0 | 1 | 0 | 1 |
| 0 | 0 | 1 | 1 | 2 |
| 0 | 1 | 0 | 0 | 2 |
| 0 | 1 | 0 | 1 | 3 |
| 0 | 1 | 1 | 0 | 3 |
| 0 | 1 | 1 | 1 | 4 |
| 1 | 0 | 0 | 0 | -4 |
| 1 | 0 | 0 | 1 | -3 |
| 1 | 0 | 1 | 0 | -3 |
| 1 | 0 | 1 | 1 | -2 |
| 1 | 1 | 0 | 0 | -2 |
| 1 | 1 | 0 | 1 | -1 |
| 1 | 1 | 1 | 0 | -1 |
| 1 | 1 | 1 | 1 | 0 |
wobei Bᵢ₋₁, Bᵢ, Bᵢ₊₁ und Bᵢ₊₂ die vier angrenzenden Bits des Multiplikators sind und Rₖ der umcodierte Codeelementausgang ist;
mehreren Partialprodukt-Generatoren (22a-h), wovon jeder auf einen Codeelementausgang der Umcodierungsschaltungsanordnung (18) anspricht, um ein Partialprodukt zu erzeugen, das gleich dem umcodierten Codeelement des Multiplikators, multipliziert mit dem Multiplikanten, ist, wobei jeder Partialprodukt-Generator einen Multiplexer (33), der auf Rₖ, das gleich 3 oder -3 ist, anspricht, um entweder den Multiplikanten (A) oder den dreifachen Multiplikanten (3A) auszuwählen, eine Schiebeeinrichtung (34), die an den Ausgang des Multiplexers (32) angeschlossen ist und auf Rₖ, das gleich 2, -2, 4 oder -4 ist, anspricht, sowie eine Invertereinrichtung (36) besitzt, die auf das Vorzeichen von Rₖ selektiv anspricht, um das Vorzeichenbit des Ausgangs des Multiplexers und der Schiebeeinrichtung zu invertieren, wodurch die geeigneten Vorzeichenbits invertiert werden; und
einer Addier-Schaltungsanordnung (24, 26, 28) für mit Vorzeichen behaftete Codeelemente, um die Partialprodukte zu summieren.

2. Schaltung nach Anspruch 1, bei der die Addier-Schaltungsanordnung (24, 26, 28) für mit Vorzeichen behaftete Codeelemente mehrere Addierer für mit Vorzeichen behaftete Codeelemente enthält.

3. Schaltung nach Anspruch 2, ferner mit einer Ausgangsumsetzungs-Schaltungsanordnung (30), die eine mit Vorzeichen behaftete Codeelementzahl in eine Binärzahl übersetzt.

4. Schaltung nach Anspruch 2, ferner mit einer Ausgangsumsetzungs-Schaltungsanordnung (30), die eine mit Vorzeichen behaftete Codeelementzahl in eine Zweierkomplementzahl übersetzt.

5. Schaltung nach Anspruch 1, ferner mit einer Ausgangsumsetzungs-Schaltungsanordnung, die den Multiplikanten in eine mit Vorzeichen behaftete Codeelementzahl übersetzt.

6. Schaltung nach irgendeinem vorangehenden Anspruch, wobei die Partialproduktgeneratoren (22a-h) Nullsetzungseinrichtungen enthalten, die als Antwort auf Multiplikator-Codeelemente, die den Wert Null als besitzen, eine Null ausgeben.

## Revendications

1. Circuit pour multiplier un multiplicande par un multiplicateur, comprenant :
des moyens d'entrée pour recevoir le multiplicande (A);
un circuit de triplement (12) pour former un produit intermédiaire égal au triple du multiplicande;
un circuit de reprogrammation (18) pour reprogrammer le multiplicateur (B) formé de groupes de trois bits en une représentation octale conformément au tableau suivant :
| Bᵢ₊₂ | Bᵢ₊₁ | Bᵢ | Bᵢ₋₁ | Rₖ |
|---|---|---|---|---|
| 0 | 0 | 0 | 0 | 0 |
| 0 | 0 | 0 | 1 | 1 |
| 0 | 0 | 1 | 0 | 1 |
| 0 | 0 | 1 | 1 | 2 |
| 0 | 1 | 0 | 0 | 2 |
| 0 | 1 | 0 | 1 | 3 |
| 0 | 1 | 1 | 0 | 3 |
| 0 | 1 | 1 | 1 | 4 |
| 1 | 0 | 0 | 0 | -4 |
| 1 | 0 | 0 | 1 | -3 |
| 1 | 0 | 1 | 0 | -3 |
| 1 | 0 | 1 | 1 | -2 |
| 1 | 1 | 0 | 0 | -2 |
| 1 | 1 | 0 | 1 | -1 |
| 1 | 1 | 1 | 0 | -1 |
| 1 | 1 | 1 | 1 | 0 |
Bᵢ₋₁, Bᵢ, bᵢ₊₁ et Bᵢ₊₂ étant les quatre bits adjacents du multiplicateur et Rₖ le signal de sortie numérique reprogrammé;
une pluralité de générateurs (22a-h) de produits partiels, dont chacun est sensible à un chiffre délivré par le circuit de se programmation (18) pour produire un produit partiel égal au chiffre reprogrammé du multiplicateur multiplié par le multiplicande, chaque générateur de produits partiels possédant un multiplexeur (32) apte à répondre à Rₖ égal à 3 ou -3 pour sélectionner soit le multiplicande (A), soit le triple du multiplicande (3A), des moyens de décalage (3) connectés à la sortie du multiplexeur (32) et aptes à répondre à Rₖ égal à 2, -2, 4 ou -4, et des moyens inverseurs (36) aptes à répondre au signe de Rₖ pour inverser de façon sélective le bit de signe du signal de sortie du multiplexeur et des moyens de décalage, à l'aide desquels les bits de signe appropriés sont inversés; et
un circuit (24,26,28) d'addition de chiffres pourvus de signes, pour former la somme des produits partiels.

2. Circuit selon la revendication 1, selon lequel ledit circuit (24,26,28) d'addition de chiffres pourvus de signes comprend une pluralité d'additionneurs de chiffres pourvus de signes.

3. Circuit selon la revendication 2 et comprenant en outre un circuit de conversion de sortie (30) pour convertir un nombre de chiffres pourvus de signes en un nombre binaire.

4. Circuit selon la revendication 2 et comportant en outre un circuit de conversion de sortie (30) pour convertir un nombre de chiffres pourvus de signes en un nombre sous forme de complément à deux.

5. Circuit selon la revendication 1 et comprenant en outre un circuit de conversion de sortie pour convertir le multiplicande en un nombre de chiffres pourvus de signes.

6. Circuit selon l'une quelconque des revendications précédentes, dans lequel lesdits générateurs (22a-h) de produits partiels incluent des moyens de production de zéro pour délivrer un zéro en réponse à des chiffres du multiplicateur possédant une valeur égale à zéro.
